# EUROPÄISCHE PATENTSCHRIFT

(11) **EP 4 332 267 B1**
(45) Veröffentlichungstag und Bekanntmachung des Hinweises auf die Patenterteilung: **14.05.2025**
(21) Anmeldenummer: 22193877.2
(22) Anmeldetag: 05.09.2022
(51) Int. Cl.: C23C 18/08, C23C 18/06, C23C 18/12, C23C 18/14, C23C 28/00, B32B 15/00, C04B 37/02

(54) **VERFAHREN ZUR HERSTELLUNG EINES METALL-KERAMIK-SUBSTRATS**
METHOD FOR PRODUCING A METAL-CERAMIC SUBSTRATE
PROCÉDÉ DE FABRICATION D'UN SUBSTRAT MÉTAL-CÉRAMIQUE

(43) Veröffentlichungstag der Anmeldung: 06.03.2024
(73) Patentinhaber: Heraeus Electronics GmbH & Co. KG, 63450 Hanau (DE)
(72) Erfinder: WACKER, Richard, 63450 Hanau (DE); SCHEIBEL, Markus, 63450 Hanau (DE); SCHWÖBEL, Andre, 63450 Hanau (DE); STADNIK, Alan Paul, 63450 Hanau (DE); MILLER, Robert, 63450 Hanau (DE)
(74) Vertreter: Heraeus IP

(56) Entgegenhaltungen:
- EP-A1- 2 814 788
- US-A1- 2021 136 963

## Beschreibung

Die vorliegende Erfindung betrifft ein Verfahren zur Herstellung eines Metall-Keramik-Substrats und ein Metall-Keramik-Substrat.

Metall-Keramik-Substrate spielen eine wichtige Rolle im Bereich der Leistungselektronik. Sie sind ein maßgebliches Element beim Aufbau von elektronischen Bauteilen und sorgen für eine schnelle Ableitung hoher Wärmemengen beim Betrieb dieser Bauteile. Metall-Keramik-Substrate bestehen üblicherweise aus einer Keramikschicht und einer Metallschicht, die mit der Keramikschicht verbunden ist.

Zur Verbindung der Metallschicht mit der Keramikschicht sind aus dem Stand der Technik mehrere Verfahren bekannt. Beim sogenannten DCB ("Direct Copper Bonding") -Verfahren wird eine Kupferfolie durch Reaktion von Kupfer mit einem Reaktivgas (üblicherweise Sauerstoff) oberflächlich mit einer Kupferverbindung (üblicherweise Kupferoxid) versehen, die einen niedrigeren Schmelzpunkt als Kupfer aufweist. Wenn die so behandelte Kupferfolie auf einen Keramikkörper aufgebracht und der Verbund erhitzt wird, schmilzt die Kupferverbindung und benetzt die Oberfläche des Keramikkörpers, so dass es zu einer stabilen stoffschlüssigen Verbindung zwischen der Kupferfolie und dem Keramikkörper kommt. Dieses Verfahren ist zum Beispiel in der US 3744120 A oder der DE 2319854 C2 beschrieben.

In einem alternativen Verfahren können Metallfolien bei Temperaturen von etwa 650 bis 1000°C mit Keramikkörpern verbunden werden, wobei ein spezielles Lot verwendet wird, das ein Metall mit einem Schmelzpunkt von wenigstens 700°C (üblicherweise Silber) und ein Aktivmetall enthält. Die Rolle des Aktivmetalls besteht darin, mit dem Keramikmaterial zu reagieren und so eine Verbindung des Keramikmaterials mit dem übrigen Lot unter Bildung einer Reaktionsschicht zu ermöglichen, während das Metall mit einem Schmelzpunkt von wenigstens 700°C zur Verbindung dieser Reaktionsschicht mit der Metallfolie dient. So schlägt zum Beispiel die JP4812985 B2 vor, eine Kupferfolie mit einem Keramikkörper unter Verwendung eines Lotes zu verbinden, das 50 bis 89 Gewichtsprozent Silber sowie darüber hinaus Kupfer, Bismut und ein Aktivmetall enthält. Mit diesem Verfahren gelingt es, die Kupferfolie mit dem Keramikkörper zuverlässig zu fügen. Um Probleme im Zusammenhang mit der Migration von Silber zu vermeiden, kann es vorteilhaft sein, silberfreie Lote zur Verbindung von Metallfolien mit Keramikkörpern zu verwenden. Diese Lote basieren zum Beispiel auf hochschmelzenden Metallen (insbesondere Kupfer), niedrigschmelzenden Metallen (wie Bismut, Indium oder Zinn) und Aktivmetallen (wie Titan). Eine solche Technik wird zum Beispiel in der DE 102017114893 A1 vorgeschlagen.

Beim Aufbau von elektronischen Bauteilen werden Metall-Keramik-Substrate üblicherweise mit einem Bauelement, insbesondere einem Chip, bestückt. Für die Bestückung des Metall-Keramik-Substrats mit einem Bauelement ist es in der Regel erforderlich, dass der mit dem Bauelement zu bestückende Bereich des Metall-Keramik-Substrats mit einem silberhaltigen Kontaktbereich versehen ist. Durch die Bereitstellung des silberhaltigen Kontaktbereichs wird eine leichtere Anbindung des Bauelements mit dem Metall-Keramik-Substrat durch gängige Verfahren wie Sintern oder Löten ermöglicht. Zur Schaffung des Kontaktbereichs wird das Metall-Keramik-Substrat in der Regel zunächst bereichsweise mit einer Ätzlösung behandelt, um eine gewünschte Strukturierung auszubilden. Danach wird der Kontaktbereich vorgesehen, indem bereichsweise eine silberhaltige Beschichtung auf der Oberfläche des strukturierten Metall-Keramik-Substrats erzeugt wird. Dies geschieht üblicherweise durch elektrochemische Abscheidung von Silber.

Nachteilig bei der elektrochemischen Abscheidung ist, dass dabei die Oberfläche des Metall-Keramik-Substrats (im Kontaktierungsbereich sowie daneben) beschädigt wird. So bilden sich häufig in der Oberfläche des Metalls des Metall-Keramik-Substrats Löcher aus, die Fehlstellen für anzubindende Komponenten, insbesondere Bauelemente oder Kontaktierungsmittel (wie zum Beispiel Bonddrähte), darstellen können, so dass für die Anbindung dieser Komponenten weniger Oberfläche zur Verfügung steht. Dies kann dazu führen, dass zwar eine Anbindung einer Komponente an das Metall-Keramik-Substrat möglich, die Haftfestigkeit jedoch vermindert ist. Zudem wird durch die elektrochemische Abscheidung auch die Metallschicht des Metall-Keramik-Substrats insbesondere an ihrer Verbindungsfläche zur Keramik angegriffen. In diesem Prozess werden elektrochemisch Metallionen aus der Metallschicht des Metall-Keramik-Substrats herausgelöst und durch Silberionen ersetzt. Dabei werden Silberionen überwiegend an der Oberfläche des Metall-Keramik-Substrats abgeschieden, während aber die Metallionen der Metallschicht überwiegend in einem Bereich in der Nähe des Keramikkörpers herausgelöst werden. Dies führt zu Löchern im Verbindungsbereich und damit verbunden zu einer Abnahme der Zuverlässigkeit des Metall-Keramik-Substrats, die sich insbesondere bei Temperaturwechselbelastungen darin zeigt, dass sich die Metallschicht vom Keramikkörper löst.

Nachteilig bei den aus dem Stand der Technik bekannten Verfahren ist ferner, dass eine bereichsweise Abscheidung von Silber durch elektrochemische Verfahren voraussetzt, dass die Bereiche auf der Oberfläche des Metall-Keramik-Substrats, auf die kein Silber aufgebracht werden soll, geschützt werden müssen. Hierzu werden diese Bereiche mit einer Maske versehen, die nach der Silberabscheidung wieder entfernt werden muss. Die Maskierung dieser Bereiche ist jedoch zum einen verfahrenstechnisch aufwändig, zum anderen kann sie die Entstehung von Löchern im Verbindungsbereich nicht verhindern, da sie aufgrund von randseitigen Strukturierungen in der Metallschicht von der silberionenhaltigen Lösung unterspült wird. Außerdem verbleiben üblicherweise Reste der Maskierung auf der Oberfläche, die die Funktion des Metall-Keramik-Substrats beeinträchtigen können.

Aus der US 2021/136963 A1 ist ein Verfahren zur Herstellung eines elektronischen Moduls bekannt, bei dem wenigstens zwei elektronische Komponenten auf einem Substrat befestigt werden, diese so mit einem dielektrischen Material bedeckt werden, dass eine Aussparung geschaffen wird, und auf eine erste Oberfläche der Aussparung eine Tinte gedruckt wird, die einen Metallvorläufer und eine organische Verbindung, die bei Raumtemperatur und Umgebungsdruck flüssig ist, enthält.

Die EP 2814788 A1 umfasst ein Verfahren zur Herstellung eines Metall-Keramik-Substrats, bei dem eine erste Oberflächenseite der Keramik mit einer ersten Metallisierung und eine zweite Oberflächenseite der Keramik mit einer zweiten Metallisierung verbunden wird, wobei die erste Metallisierung mit einem DCB-Verfahren erzeugt wird, während die zweite Metallisierung aus Aluminium oder einer Aluminiumlegierung hergestellt wird.

Wünschenswert wäre es daher, ein Verfahren zur Herstellung eines Metall-Keramik-Substrats aufweisend einen silberhaltigen Kontaktbereich bereitzustellen, das wenigstens einen Nachteil der Verfahren aus dem Stand der Technik überwindet.

Eine Aufgabe der vorliegenden Erfindung besteht daher vorzugsweise darin, ein Verfahren zur Herstellung eines Metall-Keramik-Substrats aufweisend einen silberhaltigen Kontaktbereich bereitzustellen, mit dem ein Metall-Keramik-Substrat erhalten werden kann, mit dem anzubindende Komponenten, insbesondere Bauelemente und Kontaktierungsmittel (wie zum Beispiel Bonddrähte), mit hoher Haftfestigkeit verbunden werden können.

Eine weitere Aufgabe der vorliegenden Erfindung besteht vorzugsweise darin, ein Verfahren zur Herstellung eines Metall-Keramik-Substrats aufweisend einen silberhaltigen Kontaktbereich bereitzustellen, mit dem ein Metall-Keramik-Substrat erhalten werden kann, das eine hohe Zuverlässigkeit bei Temperaturwechselbelastungen (im Sinne einer stabilen Verbindung zwischen der Metallschicht und dem Keramikkörper) aufweist.

Eine weitere Aufgabe der vorliegenden Erfindung besteht vorzugsweise darin, ein Verfahren zur Herstellung eines Metall-Keramik-Substrats aufweisend einen silberhaltigen Kontaktbereich bereitzustellen, bei dem eine Maskierung der Oberfläche der Metallschicht zur Schaffung des silberhaltigen Kontaktbereichs nicht erforderlich ist.

Eine weitere Aufgabe der vorliegenden Erfindung besteht vorzugsweise darin, ein Verfahren zur Herstellung eines Metall-Keramik-Substrats aufweisend einen silberhaltigen Kontaktbereich bereitzustellen, das technisch mit geringem Aufwand durchführbar ist.

Ein Beitrag zur wenigstens teilweisen Erfüllung wenigstens einer der vorstehenden Aufgaben wird geleistet durch ein Verfahren zur Herstellung eines Metall-Keramik-Substrats aufweisend einen silberhaltigen Kontaktbereich, umfassend die Schritte
a) Bereitstellung eines Metall-Keramik-Substrats aufweisend
   a1) einen Keramikkörper und
   a2) eine mit dem Keramikkörper flächig verbundene Metallschicht, wobei die Keramik des Keramikkörpers aus der Gruppe ausgewählt ist, die aus Aluminiumnitridkeramiken, Siliziumnitridkeramiken und Aluminiumoxidkeramiken besteht,
b) Bereitstellung einer Silbertinte enthaltend
   b1) einen Silbervorläufer, wobei der Silbervorläufer ein Silbercarboxylat ist, und
   b2) eine organische Verbindung, die bei Raumtemperatur und Umgebungsdruck flüssig ist, wobei die organische Verbindung ein Terpen umfasst,
   wobei der Anteil an Silber im Bereich von 1 - 60 Gewichtsprozent, bezogen auf das Gewicht der Silbertinte, liegt,
c) Aufbringen der Silbertinte auf einen Bereich der Metallschicht des Metall-Keramik-Substrats und
d) Zersetzung des in der Silbertinte enthaltenen Silbervorläufers zu Silber unter Erhalt eines Metall-Keramik-Substrats aufweisend einen silberhaltigen Kontaktbereich.

In dem erfindungsgemäßen Verfahren wird ein Metall-Keramik-Substrat bereitgestellt.

Das Metall-Keramik-Substrat umfasst einen Keramikkörper.

Der Keramikkörper ist vorzugsweise ein Körper, der aus Keramik gebildet ist. Der Körper kann eine beliebige Geometrie einnehmen, ist aber vorzugsweise als Quader ausgestaltet. Der Keramikkörper weist Begrenzungsflächen auf, im Falle eines Quaders sechs Begrenzungsflächen. Als Hauptbegrenzungsfläche wird hierin vorzugsweise die Begrenzungsfläche mit dem größten Flächeninhalt bezeichnet, die mit der Metallschicht flächig verbunden ist. Die Hauptbegrenzungsfläche liegt vorzugsweise in der Haupterstreckungsebene oder verläuft parallel zu dieser. Demnach wird unter Haupterstreckungsebene des Keramikkörpers vorzugsweise eine Ebene verstanden, die parallel zur Hauptbegrenzungsfläche des Keramikkörpers verläuft oder diese umschließt.

Die Keramik des Keramikkörpers ist vorzugsweise eine isolierende Keramik. Die Keramik ist aus der Gruppe ausgewählt, die aus Aluminiumnitridkeramiken, Siluziumnitridkeramiken und Aluminiumoxidkeramiken (wie zum Beispiel ZTA ("Zirconia Toughened Alumina") -Keramiken) besteht. Gemäß einer ganz besonders bevorzugten Ausführungsform besteht der Keramikkörper aus (1) wenigstens einem Element, das aus der Gruppe ausgewählt ist, die aus Silizium und Aluminium besteht, (2) wenigstens einem Element, das aus der Gruppe ausgewählt ist, die aus Sauerstoff und Stickstoff besteht, optional (3) wenigstens einem Element, das aus der Gruppe ausgewählt ist, die aus (3a) Metallen der seltenen Erden, (3b) Metallen der zweiten Hauptgruppe des Periodensystems der Elemente, (3c) Zirkonium, (3d) Kupfer, (3e) Molybdän und (3f) Silizium besteht, und optional (4) unvermeidlichen Verunreinigungen. Gemäß noch einer weiteren ganz besonders bevorzugten Ausführungsform ist der Keramikkörper frei von Bismut, Gallium und Zink.

Der Keramikkörper weist vorzugsweise eine Dicke von 0,05 - 10 mm, mehr bevorzugt im Bereich von 0,1 - 5 mm und besonders bevorzugt im Bereich von 0,15 - 3 mm auf.

Das Metall-Keramik-Substrat umfasst eine Metallschicht, die flächig mit dem Keramikkörper verbunden ist.

Die Metallschicht ist mit dem Keramikkörper vorzugsweise stoffschlüssig verbunden. Gemäß einer bevorzugten Ausführungsform ist die Metallschicht mit dem Keramikkörper über ein DCB (Direct Copper Bonding) -Verfahren verbunden. Gemäß einer weiteren bevorzugten Ausführungsform ist die Metallschicht mit dem Keramikkörper über ein Hartlotverfahren verbunden. Bei dem Hartlotverfahren kann es sich zum Beispiel um ein AMB (Active Metal Brazing) -Verfahren handeln, wobei vorzugsweise silberfreie Hartlote (der Gehalt an Silber beträgt dann vorzugsweise weniger als 1,0 Gewichtsprozent basierend auf dem Feststoffgehalt des Hartlotes) oder silberhaltige Hartlote (der Gehalt an Silber beträgt dann vorzugsweise wenigstens 50 Gewichtsprozent basierend auf dem Feststoffgehalt des Hartlotes) verwendet werden. Folglich kann die Metallschicht auch eine Verbindungsschicht umfassen, die mit dem Keramikkörper in Kontakt steht. Bei der Verbindungsschicht kann es sich zum Beispiel um eine Lotschicht (insbesondere eine Hartlotschicht) oder eine Diffusionsschicht handeln.

Die Metallschicht ist mit dem Keramikkörper flächig verbunden. Dementsprechend ist die Metallschicht flächig vorzugsweise mit der Hauptbegrenzungsfläche der Keramik verbunden. Die Metallschicht ist vorzugsweise nicht mit der gesamten Hauptbegrenzungsfläche der Keramik verbunden. Insbesondere kann es vorgesehen sein, dass die Hauptbegrenzungsfläche des Keramikkörpers größer ist als die Fläche der mit dem Keramikkörper verbundenen Metallschicht. In diesen Fällen steht die Hauptbegrenzungsfläche des Keramikkörpers über. Darüber hinaus ist die Metallschicht vorzugsweise strukturiert. Unter Strukturierungen werden Ausnehmungen von der Metallschicht verstanden, um einzelne Abschnitte der Metallschicht voneinander zu trennen und damit elektrisch zu isolieren. Derartige Strukturierungen werden üblicherweise durch Ätztechniken erzeugt.

Das Metall der Metallschicht ist vorzugsweise aus der Gruppe ausgewählt, die aus Kupfer, Aluminium und Molybdän besteht. Gemäß einer besonders bevorzugten Ausführungsform ist das Metall der Metallschicht aus der Gruppe ausgewählt, die aus Kupfer und Molybdän besteht. Gemäß einer ganz besonders bevorzugten Ausführungsform ist das Metall der Metallschicht Kupfer. Gemäß einer weiteren ganz besonders bevorzugten Ausführungsform besteht die Metallschicht aus Kupfer und unvermeidlichen Verunreinigungen.

Die Metallschicht weist vorzugsweise eine Dicke im Bereich von 0,01 - 10 mm, besonders bevorzugt im Bereich von 0,03 - 5 mm und ganz besonders bevorzugt im Bereich von 0,05 - 3 mm auf.

In dem erfindungsgemäßen Verfahren wird eine Silbertinte bereitgestellt.

Die Silbertinte enthält wenigstens einen Silbervorläufer.

Unter Silbervorläufer wird vorzugsweise eine Silberverbindung entstanden, die unter Erhalt von Silber zersetzt werden kann.

Gemäß einer bevorzugten Ausführungsform erfolgt die Zersetzung des Silbervorläufers dadurch, dass der Silbervorläufer einer Zersetzungstemperatur ausgesetzt wird. Gemäß einer weiteren bevorzugten Ausführungsform weist der Silbervorläufer eine Zersetzungstemperatur im Bereich von 50 - 500 °C, mehr bevorzugt im Bereich von 80 - 500 °C, noch mehr bevorzugt im Bereich von 150 - 500 °C, besonders bevorzugt im Bereich von 180 - 350 °C, ganz besonders bevorzugt im Bereich von 150 - 300 °C, so zum Beispiel im Bereich von 180 - 270 °C auf.

Gemäß einer weiteren bevorzugten Ausführungsform erfolgt die Zersetzung des Silbervorläufers dadurch, dass der Silbervorläufer einer Bestrahlung ausgesetzt wird. Gemäß noch einer weiteren bevorzugten Ausführungsform lässt sich der Silbervorläufer zersetzen, wenn wenigstens 80%, besonders bevorzugt wenigstens 90%, der Strahlung eine Wellenlänge im Bereich von 100 nm bis 1 mm, im Bereich von 100 nm bis 7 µm, im Bereich von 280 nm bis 100 µm, im Bereich von 800 nm bis 10 µm, im Bereich von 1 bis 10 µm, im Bereich von 1 bis 8 µm oder im Bereich von 1 bis 5 µm, bezogen auf die gesamte aufgebrachte Strahlung, aufweist.

Der Silbervorläufer weist erfindungsgemäß ein Kation und ein Anion auf.

Das Kation des Silbervorläufers ist Silber. Das Anion des Silbervorläufers ist aus der Gruppe ausgewählt, die aus Carboxylaten besteht. Der Silbervorläufer ist daher ein Silbercarboxylat.

Die Silbertinte kann einen oder mehr als einen Silbervorläufer enthalten. Wenn die Silbertinte mehr als einen Silbervorläufer enthält, umfasst die Silbertinte vorzugsweise eine Kombination aus wenigstens zwei Silbercarboxylaten oder eine Kombination aus wenigstens einem Silbercarboxylat und wenigstens einem Silbercarbamat.

Unter einem Silbercarboxylat wird ein Carbonsäuresalz von Silber verstanden, das wenigstens aus einem Silberkation und wenigstens einem Carboxylatanion besteht. Das Carboxylatanion kann linear oder verzweigt sein oder zyklische Strukturelemente aufweisen. Das Carboxylatanion kann gesättigt oder ungesättigt sein. Gemäß einer bevorzugten Ausführungsform ist das Carboxylat aus der Gruppe ausgewählt, die aus Monocarboxylaten, Dicarboxylaten, cyclischen Carboxylaten und Ketocarboxylaten besteht.

Gemäß einer Ausführungsform werden lineare, gesättigte Carboxylate bevorzugt, vorzugsweise Carboxylate mit 1 bis 20 Kohlenstoffatomen und besonders bevorzugt Carboxylate mit 7 bis 16 Kohlenstoffatomen, wozu immer das Kohlenstoffatom der Carboxylatgruppe gehört. Gemäß einer bevorzugten Ausführungsform sind die linearen Carboxylate aus der Gruppe ausgewählt, die aus Acetat, Propionat, Butanoat, Pentanoat, Hexanoat, Heptanoat, Octanoat, Nonanoat, Decanoat, Undecanoat, Dodecanoat, Tetradecanoat, Hexadecanoat und Octadecanoat besteht.

Gemäß einer weiteren Ausführungsform werden gesättigte Isocarboxylate oder gesättigte Neocarboxylate mit 1 bis 20 Kohlenstoffatomen, vorzugsweise mit 7 bis 16 Kohlenstoffatomen verwendet. In einigen Ausführungsformen werden Neocarboxylate mit wenigstens fünf Kohlenstoffatomen bevorzugt. Die Neocarboxylate mit wenigstens fünf Kohlenstoffatomen sind vorzugsweise aus der Gruppe ausgewählt, die aus Neopentanoat, Neohexanoat, Neoheptanoat, Neooctanoat, Neononanoat, Neodecanoat und Neododecanoat besteht. Solche Neocarboxylate werden zum Beispiel von Shell oder Exxon hergestellt.

Gemäß einer bevorzugten Ausführungsform handelt es sich bei dem Silbercarboxylat um ein lineares, gesättigtes Silbercarboxylat. Gemäß einer besonders bevorzugten Ausführungsform ist das lineare, gesättigte Silbercarboxylat aus der Gruppe ausgewählt, die aus Silberacetat, Silberpropionat, Silberbutanoat, Silberpentanoat, Silberhexanoat, Silberheptanoat, Silberoctanoat, Silbernonanoat, Silberdecanoat, Silberundecanoat, Silberdodecanoat, Silbertetradecanoat, Silberhexadecanoat und Silberoctadecanoat besteht.

Gemäß einer weiteren bevorzugten Ausführungsform ist das Silbercarboxylat aus der Gruppe ausgewählt, die aus gesättigten Silberisocarboxylaten und gesättigten Silberneocarboxylaten besteht. Gemäß einer besonders bevorzugten Ausführungsform ist das gesättigte Silberneocarboxylat aus der Gruppe ausgewählt, die aus Silberneopentanoat, Silberneohexanoat, Silberneoheptanoat, Silberneooctanoat, Silberneononanoat, Silberneodecanoat und Silberneododecanoat besteht.

Gemäß einer ganz besonders bevorzugten Ausführungsform ist das Silbercarboxylat ein Silberneodecanoat.

Gemäß einer bevorzugten Ausführungsform ist der Silbervorläufer bei Raumtemperatur ein Feststoff. Handelt es sich bei der erfindungsgemäßen Silbertinte um eine Flüssigkeit oder ein Gemisch mit festen und flüssigen Bestandteilen, so kann zumindest ein Teil des Silbervorläufers in vollständig gelöste Form übergegangen sein.

Der Anteil an Silber liegt im Bereich von 1 - 60 Gewichtsprozent bezogen auf das Gewicht der Silbertinte.

Gemäß einer bevorzugten Ausführungsform liegt der Anteil von Silber im Bereich von 1 - 50 Gewichtsprozent, so zum Beispiel im Bereich von 10 - 30 Gewichtsprozent oder im Bereich von 30 - 50 Gewichtsprozent, bezogen auf das Gewicht der Silbertinte. Vorzugsweise wird der Anteil von Silber, bezogen auf das Gewicht der Silbertinte, durch thermogravimetrische Analyse (TGA) bestimmt.

Gemäß einer weiteren bevorzugten Ausführungsform liegt der Anteil des wenigstens eines Silbercarboxylats im Bereich von 10 - 80 Gewichtsprozent, mehr bevorzugt im Bereich von 20 - 80 Gewichtsprozent, besonders bevorzugt im Bereich von 20 - 60 Gewichtsprozent und ganz besonders bevorzugt im Bereich von 20 - 45 Gewichtsprozent, bezogen auf das Gewicht der Silbertinte.

Die Silbertinte enthält wenigstens eine organische Verbindung, die bei Raumtemperatur und Umgebungsdruck flüssig ist, wobei die organische Verbindung ein Terpen umfasst.

Die Raumtemperatur entspricht 20 °C (+293 K). Der Begriff Umgebungsdruck steht für einen absoluten Druck von 1013 hPa. Die Standardluftfeuchtigkeit ist in diesem Zusammenhang 50% RH. Als flüssig ist eine organische Verbindung vorzugsweise dann anzusehen, wenn sie eine Viskosität im Bereich von 1 bis 300 mPas, bestimmt nach DIN 53019-1:2008 bei 20 °C, aufweist. Die Viskosität wird vorzugsweise mit einem Brookfield DV3 Rheometer, Spindel Nr. 21, bei 100 U/min und 20°C gemessen.

Die organische Verbindung umfasst wenigstens ein Terpen. Gemäß einer besonders bevorzugten Ausführungsform umfasst die organische Verbindung wenigstens ein Terpen, das 5 - 20 Kohlenstoffatome und ganz besonders bevorzugt 5 - 12 Kohlenstoffatome enthält.

Ein Terpen ist vorliegend vorzugsweise ein natürlich vorkommender ungesättigter Kohlenwasserstoff, der aus natürlichen Stoffen isoliert werden kann und dessen Struktur auf eine oder mehrere Isopreneinheiten zurückgeführt werden kann. Einige Terpene können heute auch industriell und künstlich gewonnen werden. Die Polymere von cis- und trans-Polyisopren werden in der Regel nicht als Terpene angesehen. Das Terpen ist vorzugsweise ein azyklisches Terpen oder ein zyklisches Terpen. Unter den cyclischen Terpenen werden monocyclische Terpene bevorzugt.

Gemäß einer bevorzugten Ausführungsform ist das Terpen aus der Gruppe ausgewählt, die aus Orangenterpen, Limonen und Pinen besteht.

Orangenterpen ist ein flüssiges Terpengemisch mit einer Siedetemperatur im Bereich von 170 bis 180°C (p = 1 bar), das üblicherweise durch Kaltpressung von Orangenschalen gewonnen wird. Orangenterpen enthält mehr als 80 Gew.-%, vorzugsweise mehr als 85 Gew.-% und besonders bevorzugt mehr als 90 Gew.-% an (+)/(-)-Limonen. Weitere Bestandteile von Orangenterpenen sind häufig Aldehyde wie Octanal, Decanal, Sinensal sowie Octylacetat und Nerylacetat. Ein Lieferant von Orangenterpen (CAS-Nr. 68647-72-3) ist die Carl Roth GmbH, 76231 Karlsruhe, Deutschland.

Limonen enthält vorliegend vorzugsweise (r)-(+)-Limonen, (s)-(-)-Limonen oder ein Gemisch aus beiden in beliebigem Verhältnis, zum Beispiel ein racemisches Gemisch.

Ein Pinen ist vorliegend vorzugsweise ein Monoterpenkohlenwasserstoff mit der Summenformel C₁₀H₁₆ . Ein besonders bevorzugtes Pinen ist β-Pinen (CAS-Nr. 19902-08-0).

Gemäß einer bevorzugten Ausführungsform enthält die Silbertinte wenigstens einen weiteren Bestandteil. Dieser wenigstens eine weitere Bestandteil ist vorzugsweise aus der Gruppe ausgewählt, die aus Adhäsionspromotoren, Viskositätshilfsmitteln, organischen Lösungsmitteln und weiteren Additiven besteht.

Gemäß einer weiteren bevorzugten Ausführungsform enthält die Silbertinte wenigstens einen Adhäsionspromotor.

Der wenigstens eine Adhäsionspromotor ist vorzugsweise aus der Gruppe der Rhodiumalkylverbindungen ausgewählt. Rhodiumalkylverbindungen sind Rhodiumverbindungen, die wenigstens einen Alkylrest enthalten. Enthält eine Rhodiumalkylverbindung mehr als einen Alkylrest, so zum Beispiel zwei oder drei Alkylreste, so können diese Alkylreste gleich oder verschieden sein. Der wenigstens eine Alkylrest hat vorzugsweise eine Länge von 2 bis 20 Kohlenstoffatomen und besonders bevorzugt eine Länge von 12, 14, 16 oder 18 Kohlenstoffatomen. Ein besonders bevorzugter Adhäsionspromotor ist Rhodiumnonanoat.

Gemäß einer bevorzugten Ausführungsform liegt der Anteil des wenigstens einen Adhäsionspromotors im Bereich von 0,1 - 5 Gewichtsprozent, bezogen auf das Gewicht der Silbertinte.

Gemäß einer weiteren bevorzugten Ausführungsform enthält die Silbertinte wenigstens ein Viskositätshilfsmittel.

Als Viskositätshilfsmittel für die Tintenzusammensetzung eignen sich insbesondere Kolophoniumharze oder deren Derivate. Ein besonders bevorzugtes Handelsprodukt ist Balsamharz, erhältlich bei der H. Reynaud & Fils GmbH, Hamburg.

Gemäß einer bevorzugten Ausführungsform liegt der Anteil des wenigstens einen Viskositätshilfsmittels im Bereich von 5 - 30 Gewichtsprozent und besonders bevorzugt im Bereich von 10 - 20 Gewichtsprozent, bezogen auf das Gewicht der Silbertinte.

Gemäß einer weiteren bevorzugten Ausführungsform enthält die Silbertinte wenigstens ein organisches Lösungsmittel.

Das wenigstens eine organische Lösungsmittel ist vorzugsweise aus der Gruppe der Glykolether ausgewählt. Glykolether sind organische Substanzen, die wenigstens eine Ethylenglykoleinheit oder eine Diethylenglykoleinheit aufweisen. Propylenglykolether oder Dipropylenglykolether werden als Glykolether besonders bevorzugt. Kommerziell erhältliche Beispiele sind Dowanol PnP (Propylenglykol n-Propylether), Dowanol PnB (Propylenglykol n-Butylether), Dowanol DPnB (Dipropylenglykol n-Butylether) und Dowanol DPnP (Dipropylenglykol n-Propylether).

Gemäß einer bevorzugten Ausführungsform liegt der Anteil des wenigstens einen organischen Lösungsmittels in einem Bereich von 0,1 bis 80 Gewichtsprozent, besonders bevorzugt im Bereich von 20 - 80 Gewichtsprozent und ganz besonders bevorzugt im Bereich von 20 - 50 Gewichtsprozent, bezogen auf das Gewicht der Silbertinte.

Gemäß einer weiteren bevorzugten Ausführungsform enthält die Silbertinte wenigstens ein Additiv.

Bei dem wenigstens einen Additiv kann es sich zum Beispiel um eine Carbonsäure handeln. Die Carbonsäure kann grundsätzlich jede dem Fachmann bekannte und geeignet erscheinende Carbonsäure sein. Vorzugsweise handelt es sich bei der Carbonsäure um eine tertiäre Carbonsäure mit wenigstens fünf Kohlenstoffatomen. Gemäß einer besonders bevorzugten Ausführungsform ist die tertiäre Carbonsäure aus der Gruppe ausgewählt, die aus Neopentansäure, Neohexansäure, Neoheptansäure, Neooctansäure, Neononansäure, Neodecansäure und Neododecansäure besteht. Gemäß einer ganz besonders bevorzugten Ausführungsform umfasst das Additiv Neodecansäure. Neocarbonsäuren werden zum Beispiel von Shell oder Exxon hergestellt. Durch die Zugabe einer Carbonsäure oder einer Kombination aus mehreren Carbonsäuren kann die Haltbarkeit der Tintenzusammensetzung verlängert werden.

Als weitere Additive kommen alle dem Fachmann bekannten chemischen Stoffe und Gemische in Betracht, die für den vorgesehenen Zweck geeignet erscheinen. Besonders bevorzugt werden als weitere Additive silikonhaltige Zusatzstoffe, zum Beispiel polyethermodifizierte Polydimethylsiloxane. Solche Additive sind zum Beispiel unter dem Markennamen BYK von BYK Additives & Instruments GmbH, 46483 Wesel, erhältlich.

Gemäß einer bevorzugten Ausführungsform liegt der Anteil des wenigstens einen Additivs im Bereich von 0,05 - 3 Gewichtsprozent und besonders bevorzugt im Bereich von 0,05 - 1 Gewichtsprozent, bezogen auf das Gewicht der Silbertinte.

Die Bestandteile der Silbertinte können auf jede Art und Weise gemischt werden, die dem Fachmann bekannt ist und von ihm als geeignet angesehen wird. Das Mischen kann bei leicht erhöhten Temperaturen durchgeführt werden, um den Mischvorgang zu erleichtern. In der Regel liegt die Temperatur während des Mischens nicht über 40 °C. Die Silbertinte kann bei Raumtemperatur oder in einem Kühlschrank gelagert werden.

Gemäß einer bevorzugten Ausführungsform liegt der Anteil der Summe des wenigstens einen Silbervorläufers und der wenigstens einen organischen Verbindung, die bei Raumtemperatur und Umgebungsdruck flüssig ist, bei wenigstens 80 Gewichtsprozent, noch mehr bevorzugt bei wenigstens 90 Gewichtsprozent, besonders bevorzugt bei wenigstens 95 Gewichtsprozent und ganz besonders bevorzugt bei wenigstens 99 Gewichtsprozent, bezogen auf das Gewicht der Silbertinte.

Gemäß einer weiteren bevorzugten Ausführungsform liegt der Anteil der Summe des wenigstens einen Silbervorläufers und von Terpenen bei wenigstens 80 Gewichtsprozent, noch mehr bevorzugt bei wenigstens 90 Gewichtsprozent, besonders bevorzugt bei wenigstens 95 Gewichtsprozent und ganz besonders bevorzugt bei wenigstens 99 Gewichtsprozent, bezogen auf das Gewicht der Silbertinte.

Gemäß einer weiteren bevorzugten Ausführungsform liegt der Anteil der Summe des wenigstens eines Silbercarboxylats und von Terpenen bei wenigstens 80 Gewichtsprozent, noch mehr bevorzugt bei wenigstens 90 Gewichtsprozent, besonders bevorzugt bei wenigstens 95 Gewichtsprozent und ganz besonders bevorzugt bei wenigstens 99 Gewichtsprozent, bezogen auf das Gewicht der Silbertinte.

Gemäß einer weiteren bevorzugten Ausführungsform liegt der Anteil der Summe des wenigstens eines Silbercarboxylats und von Terpenen im Bereich von 10 - 95 Gewichtsprozent und besonders bevorzugt im Bereich von 10 - 80 Gewichtsprozent, bezogen auf das Gewicht der Silbertinte.

Gemäß einer weiteren bevorzugten Ausführungsform liegt der Anteil der Summe des wenigstens eines Silbercarboxylats und von Terpenen im Bereich von 35 - 95 Gewichtsprozent, mehr bevorzugt bevorzugt im Bereich von 35 - 80 Gewichtsprozent, besonders bevorzugt im Bereich von 40 - 60 Gewichtsprozent und ganz besonders bevorzugt im Bereich von 45 - 55 Gewichtsprozent, bezogen auf das Gewicht der Silbertinte.

Gemäß einer besonders bevorzugten Ausführungsform liegt in der Silbertinte das Verhältnis des (i) wenigstens einen Silbercarboxylats zum (ii) wenigstens einen Terpen im Bereich von 4 : 1 bis 1 : 5, mehr bevorzugt im Bereich von 2 : 1 bis 1 : 2, besonders bevorzugt im Bereich von 1 : 1 bis 1 : 2 und ganz besonders bevorzugt im Bereich von 1 : 1,5 bis 1 : 2. Die entsprechenden Werte können vorzugsweise durch eine HPLC-Messung bestimmt werden, wobei für jede Komponente ein charakteristisches Signal ausgewählt und ins Verhältnis gesetzt wird.

Gemäß einer weiteren bevorzugten Ausführungsform beträgt in der Silbertinte das Gewichtsverhältnis von (i) Silber zu (ii) der Summe der Elemente Gold, Rhodium, Vanadium, Palladium, Platin, Osmium, Kupfer, Wolfram, Wismut, Silizium, Zirkoniumdioxid, Zinn, Kupfer und Aluminium wenigstens 100 : 1 und besonders bevorzugt wenigstens 150 : 1, bezogen auf die Gewichtsanteile in der Silbertinte.

Gemäß einer weiteren bevorzugten Ausführungsform beträgt in der Silbertinte das Gewichtsverhältnis von (i) Silber zu (ii) Rhodium wenigstens 100 : 1 und besonders bevorzugt wenigstens 150 : 1, bezogen auf die Gewichtsanteile in der Silbertinte.

Gemäß einer weiteren bevorzugten Ausführungsform beträgt der Gesamtanteil der Elemente, die aus der Gruppe ausgewählt sind, die aus Gold, Rhodium, Vanadium, Palladium, Platin, Osmium, Wolfram, Wismut, Silizium, Zirkoniumdioxid, Zinn, Kupfer und Aluminium besteht, weniger als 10 Gewichtsprozent, mehr bevorzugt weniger als 8 Gewichtsprozent, noch mehr bevorzugt weniger als 6 Gewichtsprozent, besonders bevorzugt weniger als 5 Gewichtsprozent und ganz besonders bevorzugt weniger als 2 Gewichtsprozent, so zum Beispiel weniger als 1 Gewichtsprozent, bezogen auf das Gewicht der Silbertinte.

Gemäß einer weiteren bevorzugten Ausführungsform beträgt der Gesamtanteil der Elemente, die aus der Gruppe ausgewählt sind, die aus Rhodium, Vanadium und Osmium besteht, weniger als 1 Gewichtsprozent, mehr bevorzugt weniger als 0,5 Gewichtsprozent und besonders bevorzugt weniger als 0,2 Gewichtsprozent, bezogen auf das Gewicht der Silbertinte.

Gemäß einer weiteren bevorzugten Ausführungsform beträgt der Anteil an Metallpartikeln in der Silbertinte weniger als 1 Gewichtsprozent, besonders bevorzugt weniger als 0,5 Gewichtsprozent und ganz besonders bevorzugt weniger als 0,2 Gewichtsprozent, bezogen auf das Gewicht der Silbertinte. Somit enthält die erfindungsgemäße Silbertinte praktisch keine Metallpartikel. Metallpartikel sind in diesem Zusammenhang in jedem Fall Feststoffe.

Gemäß einer weiteren bevorzugten Ausführungsform weist die Silbertinte eine Viskosität im Bereich von 0,1 - 100 mPas und besonders bevorzugt im Bereich von 20 - 70 mPas, bestimmt bei einer Temperatur von 20 °C und einem Umgebungsdruck von 1013 hPa, auf. Die Viskosität wird vorzugsweise mit einem Brookfield DV3 Rheometer, Spindel Nr. 21, bei 100 U/min und 20°C gemessen.

In dem erfindungsgemäßen Verfahren wird die Silbertinte auf einen Bereich der Metallschicht des Metall-Keramik-Substrats aufgebracht.

Die Silbertinte wird hierzu vorzugsweise auf wenigstens den Bereich der Metallschicht des Metall-Keramik-Substrats aufgebracht, auf dem der silberhaltige Kontaktbereich erzeugt werden soll.

Die Silbertinte kann auf den Bereich der Metallschicht des Metall-Keramik-Substrats auf eine fachübliche Weise aufgebracht werden. Hierzu gehören zum Beispiel das Aufbringen durch Drucken, durch Spritzauftrag, durch Pinselauftrag, durch Dispensieren und durch Schreiben und Übertragen der Silbertinte von einer Schablone auf das Metall-Keramik-Substrat, wie zum Beispiel beim Transferdruck. Vorzugsweise erfolgt das Aufbringen der Silbertinte auf wenigstens den Bereich der Metallschicht des Metall-Keramik-Substrats durch Drucken, besonders bevorzugt durch Siebdruck oder Tintenstrahldruck. Gemäß einer besonders bevorzugten Ausführungsform erfolgt die Aufbringung der Silbertinte auf einen Bereich der Metallschicht des Metall-Keramik-Substrats durch Tintenstrahldruck. Hierzu wird vorzugsweise ein Tintenstrahldrucker verwendet. Beispielhaft sei der Tintenstrahldrucker Fuji Dimatix 2850 genannt.

Die Nassschichtdicke der auf einen Bereich der Metallschicht aufgebrachten Silbertinte ist nicht weiter eingeschränkt. Gemäß einer bevorzugten Ausführungsform liegt die mittlere Nassschichtdicke der auf einen Bereich der Metallschicht des Metall-Keramik-Substrats aufgebrachten Silbertinte im Bereich von 0,5 - 30 µm und besonders bevorzugt im Bereich von 1 - 20 µm.

In dem erfindungsgemäßen Verfahren erfolgt eine Zersetzung des in der Silbertinte enthaltenen Silbervorläufers zu Silber unter Erhalt eines Metall-Keramik-Substrats aufweisend einen silberhaltigen Kontaktbereich.

Gemäß einer bevorzugten Ausführungsform erfolgt die Zersetzung des in der Silbertinte enthaltenen Silbervorläufers wenigstens durch eine Maßnahme, die aus der Gruppe ausgewählt ist, die aus thermischer Behandlung und Bestrahlung besteht. Gemäß einer weiteren bevorzugten Ausführungsform erfolgt die Zersetzung des in der Silbertinte enthaltenen Silbervorläufers durch eine Kombination von Maßnahmen, besonders bevorzugt durch eine Kombination von thermischer Behandlung und Bestrahlung, und ganz besonders bevorzugt durch eine sequenzielle Kombination von Bestrahlung und anschließender thermischer Behandlung.

Gemäß einer besonders bevorzugten Ausführungsform erfolgt die die Zersetzung des in der Silbertinte enthaltenen Silbervorläufers durch thermische Behandlung. Hierzu wird die Silbertinte vorzugsweise erhitzt. Das Erhitzen erfolgt vorzugsweise auf eine Temperatur und für eine Zeit, die erforderlich ist, damit sich der Silbervorläufer zersetzt, um einen silberhaltigen Kontaktbereich auf der Metallschicht des Metall-Keramik-Substrats zu erhalten.

Gemäß einer weiteren bevorzugten Ausführungsform erfolgt das Erhitzen auf eine Temperatur von wenigstens 50°C, mehr bevorzugt auf eine Temperatur von wenigstens 100°C, noch mehr bevorzugt auf eine Temperatur von wenigstens 150°C, besonders bevorzugt auf eine Temperatur von wenigstens 200°C und ganz besonders bevorzugt auf eine Temperatur von wenigstens 250°C.

Gemäß einer weiteren bevorzugten Ausführungsform erfolgt das Erhitzen auf eine Temperatur von nicht mehr als 800°C, mehr bevorzugt auf eine Temperatur von nicht mehr als 700°C, noch mehr bevorzugt auf eine Temperatur von nicht mehr als 600°C, besonders bevorzugt auf eine Temperatur von nicht mehr als 500°C und ganz besonders bevorzugt auf eine Temperatur von nicht mehr als 400°C.

Gemäß einer weiteren bevorzugten Ausführungsform erfolgt das Erhitzen auf eine Temperatur im Bereich von 50 - 800 °C, mehr bevorzugt auf eine Temperatur im Bereich von 100 - 700 °C, noch mehr bevorzugt auf eine Temperatur im Bereich von 150 - 600 °C, besonders bevorzugt auf eine Temperatur im Bereich von 200 - 500 °C und ganz besonders bevorzugt auf eine Temperatur im Bereich von 250 - 400 °C.

Gemäß einer weiteren bevorzugten Ausführungsform erfolgt das Erhitzen für eine Zeitdauer von wenigstens 10 Minuten, besonders bevorzugt für eine Zeitdauer von wenigstens 12 Minuten und ganz besonders bevorzugt für eine Zeitdauer von wenigstens 15 Minuten.

Gemäß einer weiteren bevorzugten Ausführungsform erfolgt das Erhitzen für eine Zeitdauer von nicht mehr als 300 Minuten, besonders bevorzugt für eine Zeitdauer von nicht mehr als 120 Minuten und ganz besonders bevorzugt für eine Zeitdauer von nicht mehr als 60 Minuten.

Gemäß einer weiteren bevorzugten Ausführungsform erfolgt das Erhitzen für eine Zeitdauer im Bereich von 10 - 300 Minuten, besonders bevorzugt für eine Zeitdauer von 12 - 120 Minuten und ganz besonders bevorzugt für eine Zeitdauer von 15 - 60 Minuten.

Gemäß noch einer weiteren bevorzugten Ausführungsform erfolgt das Erhitzen in Luftatmosphäre.

Gemäß einer besonders bevorzugten Ausführungsform erfolgt die die Zersetzung des in der Silbertinte enthaltenen Silbervorläufers durch Bestrahlung.

Gemäß einer weiteren bevorzugten Ausführungsform erfolgt die Zersetzung des in der Silbertinte enthaltenen Silbervorläufers durch Bestrahlung, wobei mindestens 80%, besonders bevorzugt mindestens 90% und ganz besonders bevorzugt 100% der Strahlung eine Wellenlänge im Bereich von 100 nm - 1 mm, mehr bevorzugt eine Wellenlänge im Bereich von 100 nm - 7 µm, noch mehr bevorzugt eine Wellenlänge im Bereich von 280 nm - 100 µm, besonders bevorzugt eine Wellenlänge im Bereich von 800 nm - 10 µm und ganz besonders bevorzugt eine Wellenlänge im Bereich von 1 bis 10 µm, so zum Beispiel eine Wellenlänge im Bereich von 1 - 8 µm oder eine Wellenlänge im Bereich von 1 - 5 µm, bezogen auf die gesamte während der Behandlung aufgebrachte Strahlung, aufweist.

Gemäß einer besonders bevorzugten Ausführungsform erfolgt die Zersetzung des in der Silbertinte enthaltenen Silbervorläufers durch Infrarotbestrahlung, vorzugsweise mit einer Spitzenwellenlänge im Bereich von 1500 nm - 4000 nm und besonders bevorzugt mit einer Spitzenwellenlänge im Bereich von 2000 - 3000 nm oder einer Spitzenwellenlänge im Bereich von 2800 - 3300 nm.

Die Verteilung der Wellenlängen einer zur der Zersetzung des in der Silbertinte enthaltenen Silbervorläufers angewandten Bestrahlung, der prozentuale Anteil der Bestrahlung (= Fläche innerhalb von zwei Grenzwellenlängen in Bezug auf die Gesamtfläche unter der Spektralkurve und y = 0) und die Spitzen in der Verteilung werden vorzugsweise mit einem Thorlabs Optical Spectrum Analyzer OSA207C: 1,0 - 12,0 µm in Kombination mit einer Hohlkernfaser, erhältlich von Opto-Knowledge Systems, Inc. in Torrance (CA), USA, bestimmt, indem ein Ende dieser Faser nahe an die Strahleroberfläche gebracht wird. Die Wellenlängenverteilung wird nach dem FT-IR-Messprinzip bestimmt.

Gemäß einer weiteren bevorzugten Ausführungsform erfolgt die Zersetzung des in der Silbertinte enthaltenen Silbervorläufers durch Bestrahlung für einen Zeitraum von weniger als 10 Minuten, mehr bevorzugt für einen Zeitraum von weniger als 5 Minuten, noch mehr bevorzugt für einen Zeitraum von weniger als 2 Minuten, besonders bevorzugt für einen Zeitraum von weniger als 60 Sekunden und ganz besonders bevorzugt für einen Zeitraum von weniger als 30 Sekunden, so zum Beispiel für einen Zeitraum von weniger als 15 Sekunden.

Gemäß noch einer weiteren bevorzugten Ausführungsform erfolgt die Zersetzung des in der Silbertinte enthaltenen Silbervorläufers durch Bestrahlung bei einer Gesamtstrahlungsflussdichte im Bereich von 100 - 1000000 W/m2. Zur Ermittlung der Gesamtstrahlungsflussdichte wird die Gesamtleistungsaufnahme der Strahler, die die Strahlung erzeugen, gemessen und der erhaltene Wert durch die beleuchtete Fläche geteilt.

Durch Zersetzung des in der Silbertinte enthaltenen Silbervorläufers zu Silber wird auf dem Metall-Keramik-Substrat ein silberhaltiger Kontaktbereich geschaffen.

Dementsprechend weist das Metall-Keramik-Substrat einen auf der Metallschicht angeordneten Kontaktbereich aufweisend Silber auf. Der Kontaktbereich dient vorzugsweise dazu, die Anbindung eines Bauelements, zum Beispiel eines Chips, auf der Metallschicht zu erleichtern. Chips werden vorzugsweise durch Sintern, Löten oder Kleben mit der Metallschicht verbunden. Da insbesondere das Befestigen von Chips auf dem Metall der Metallschicht eines Metall-Keramik-Substrats nicht ohne weiteres möglich ist, wird die Metallschicht vorzugsweise mit einem Kontaktbereich versehen. Vorzugsweise ist ein Kontaktbereich auf der Metallschicht des Metall-Keramik-Substrats an allen Positionen vorgesehen, wo später eine Bestückung des Metall-Keramik-Substrats mit Bauelementen, wie zum Beispiel Chips, erfolgen soll.

Überraschenderweise wurde festgestellt, dass Metall-Keramik-Substrate, die nach dem erfindungsgemäßen Verfahren erhalten werden, einerseits eine hohe Zuverlässigkeit bei Temperaturwechselbelastungen (im Sinne einer stabilen Verbindung zwischen der Metallschicht und dem Keramikkörper) zeigen und andererseits mit anzubindenden Komponenten, insbesondere Bauelementen und Kontaktierungsmitteln (wie zum Beispiel Bonddrähten), mit hoher Haftfestigkeit verbunden werden können. Die Anbindung von Bauelementen erfolgt dabei vorzugsweise über den Kontaktierungsbereich, während die Anbindung der Kontaktierungsmittel vorzugsweise direkt auf der Metallschicht erfolgt.

Ohne an eine Erklärung gebunden zu sein, könnte dies darauf zurückzuführen sein, dass durch das erfindungsgemäße Verfahren im Gegensatz zu den Verfahren aus dem Stand der Technik weder die Oberfläche der Metallschicht des Metall-Keramik-Substrats noch ein Bereich der Metallschicht des Metall-Keramik-Substrats in der Nähe des Keramikkörpers beschädigt werden.

Die Erfindung stellt daher ferner ein Metall-Keramik-Substrat bereit, das nach dem erfindungsgemäßen Verfahren erhältlich ist. Durch die Schaffung eines Kontaktbereichs aufweisend Silber wird eine leichtere Anbindung des Chips mit dem Metall-Keramik-Substrat durch gängige Verfahren wie Sintern oder Löten ermöglicht. Das so erhaltene Metall-Keramik-Substrat zeichnet sich durch eine hohe Zuverlässigkeit bei Temperaturwechselbelastungen (im Sinne einer stabilen Verbindung zwischen der Metallschicht und dem Keramikkörper) aus. Ferner ermöglicht das so erhaltene Metall-Keramik-Substrat eine Verbindung mit anzubindenden Komponenten, insbesondere Bauelementen und Kontaktierungsmitteln (wie zum Beispiel Bonddrähten), mit hoher Haftfestigkeit.

### Ausführungsbeispiele

Die vorliegende Erfindung wird nachstehend durch Ausführungsbeispiele näher beschrieben, die jedoch nicht als einschränkend verstanden werden sollen.

### Beispiel:

Für das Beispiel wurde ein Metall-Keramik-Substrat verwendet, bei dem ein Keramikkörper aus einer Aluminiumoxidkeramik mit der Abmessung 177,8 x 139 x 0,32 mm beidseitig mit jeweils einer Kupferschicht mit der Abmessung 170 x 132 x 0.3 mm über ein DCB (Direct Copper Bonding)-Verfahren verbunden war.

Vor der Aufbringung der silberhaltigen Kontaktbereiche wurden beide Kupferschichten gleichermaßen so strukturiert, dass isolierte Kupferbereiche der Abmaße 15 x 13 mm äquidistant zueinander auf der Aluminiumoxidkeramik vorlagen.

Auf die isolierten Kupferbereiche wurde eine Silbertinte mit folgender Zusammensetzung: 50 Gewichtsprozent Orangenterpen, 47 Gewichtsprozent Silberneodecanoat (Ag Versatic; mit einem Silberanteil von 38 Gewichtsprozent) und 3 Gewichtsprozent Carbonsäure (Versatic Carbonsäure, HEXION, Rotterdam, Niederlande) aufgebracht. Hierzu wurde die Silbertinte mittels Tintenstrahldruck (Fuji Dimatix Samba Kartusche) mittig auf jeden Kupferbereich auf einer Fläche von 5 x 5 mm appliziert. Die Nassschichtdicke betrug 4,4 µm. Innerhalb von 30 Sekunden nach dem Druck wurde die Tinte mittels UV-LED-Strahlern mit einer Wellenlänge von 385 nm für 90 s bestrahlt. Dabei wurde die Intensität der UV-Strahlung so eingestellt, dass die Temperatur am Metall-Keramik-Substrat 180 °C betrug. Das so vorbehandelte Metall-Keramik-Substrat wurde anschließend unter Stickstoffatmosphäre im Ofen erhitzt. Hierzu wurde die Temperatur mit einer Heizrate von 10 °C/min ausgehend von Raumtemperatur auf eine Temperatur von 250 °C erhöht und nach einer Stunde bei 250 °C mit einer Abkühlrate von 10 °C/min auf 25 °C erniedrigt.

Um die Eignung der erfindungsgemäßen silberhaltigen Kontaktbereiche zur Chipanbindung zu prüfen, wurde auf jeden der mit der Silbertinte geschaffenen Kontaktbereiche mittig eine Silbersinterpaste (mAgic^{®} PE338 von Heraeus) mittels Schablonendruck auf einer Fläche von 4 x 4 mm appliziert. Die Nassschichtdicke betrug 50 µm. Anschließend wurde die aufgedruckte Sinterpaste an normaler Luftatmosphäre für 10 Minuten bei 120 °C getrocknet und danach jeder Bereich mit je einem Siliziumchip mit einer Silberkontaktfläche (4 x 4 mm) vollflächig in Kontakt gebracht. Das anschließende Drucksintern dieser Anordnung erfolgte unter Stickstoffatmosphäre (<100 ppm Sauerstoff) in einer Heißpresse bei 230 °C und 12 MPa für 5 Minuten.

### Vergleichsbeispiel:

Für das Vergleichsbeispiel wurde ein Metall-Keramik-Substrat verwendet, bei dem ein Keramikkörper aus einer Aluminiumoxidkeramik mit der Abmessung 177,8 x 139 x 0,32 mm beidseitig mit jeweils einer Kupferschicht mit der Abmessung 170 x 132 x 0.3 mm über ein DCB (Direct Copper Bonding)-Verfahren verbunden war.

Vor der Aufbringung der silberhaltigen Kontaktbereiche wurden beide Kupferschichten gleichermaßen so strukturiert, dass isolierte Kupferbereiche der Abmaße 15 x 13 mm äquidistant zueinander auf der Aluminiumoxidkeramik vorlagen.

Sodann wurden silberhaltige Kontaktbereiche über eine elektrochemische Abscheidung erzeugt. Hierzu wurde über alle Kupferbereiche einer Kupferschicht zunächst mittels eines Hot Roll Laminators eine photosensitive Folie aufgebracht. Die photosensitive Folie wurde mit 30 mJ/cm² an den zu maskierenden Bereichen belichtet, um das in der photosensitiven Folie enthaltene Polymer zu härten und die Maskierung zu erhalten. Danach wurden die unbelichteten Stellen der photosensitiven Folie nasschemisch unter Verwendung einer Natriumcarbonatlösung (Konzentration = 10 g/l) entfernt. Nach einem Spülschritt zur Reinigung wurden auf die unmaskierten Bereiche der Kupferschichten des Metall-Keramik-Substrats silberhaltige Kontaktbereiche abgeschieden, die in ihrer Anzahl, Position und Dimension den silberhaltigen Kontaktbereichen des erfindungsgemäßen Beispiels entsprachen. Hierzu wurde das mit der Maskierung versehene Metall-Keramik-Substrat zunächst mit einer ersten Lösung enthaltend Wasserstoffperoxid und Schwefelsäure vorbehandelt und danach mit einer salpetersauren Silbernitratlösung (Silbergehalt = 1,0 g/l) kontaktiert. Nach der Abscheidung der silberhaltigen Kontaktbereiche wurde das Metall-Keramik-Substrat mit Wasser sorgfältig gespült, um vorhandene Rückstände zu entfernen. Anschließend wurde die Maskierung in einer Strippanlage mit einer 2,5 %igen Natriumhydroxidlösung entfernt und das Metall-Keramik-Substrat sorgfältig mit Wasser gespült.

Auch im Vergleichsbeispiel wurde auf jeden der silberhaltigen Kontaktbereiche die gleiche Silbersinterpaste in gleichen Positionen und Abmaßen aufgedruckt und, wie im erfindungsgemäßen Beispiel beschrieben, getrocknet, mit Chips bestückt und anschließend gesintert.

Beide Metall-Keramik-Substrate (sowohl das Beispiel wie auch das Vergleichsbeispiel) wurden mittels Laser zu Einzelteilen mit den Abmessungen (20,5 x 17,0 mm) geschnitten und anschließend für weitere Untersuchungen eingesetzt.

### Auswertung:

### Temperaturwechselbeständigkeitstest:

Zur Vorbereitung des Temperaturwechselbeständigkeitstests wurde zunächst mittels Ultraschallmikroskopie (PVA Tepla SAM300) überprüft, ob die vereinzelten Metall-Keramik-Substrate in einwandfreiem Zustand waren. Für den Test wurden ausschließlich Metall-Keramik-Substrate verwendet, die keine Delamination zwischen Keramikkörper und Metallschicht oder sonstige Deformationen, die zur Delamination der Metallschicht vom Keramikkörper führen könnten (zum Beispiel Risse), zeigten. Zum Testen der Temperaturwechselbeständigkeit wurden die Metall-Keramik-Substrate wiederholt für einen Zeitraum von jeweils fünf Minuten einer kalten Flüssigkeit (Temperatur -65°C, Galden Do2TS) und einer heißen Flüssigkeit (Temperatur +150°C, Galden Do2TS) in einer Zyklierkammer (ESPEC TSB-21 51) ausgesetzt. Die Metall-Keramik-Substrate wurden alle 1000 Zyklen mittels Ultraschallmikroskopie (PVA Tepla SAM300) erneut auf Delamination und sonstige Deformationen überprüft. Der Test wurde nach 3000 Zyklen beendet. Danach wurden die Metall-Keramik-Substrate wiederum mittels Ultraschallmikroskopie (PVA Tepla SAM300) auf Delamination und sonstige Deformationen überprüft. Der Zustand der jeweiligen Metall-Keramik-Substrate nach Durchführung des Temperaturwechselbeständigkeitstests wurde mit dem Zustand der Metall-Keramik-Substrate vor Durchführung des Temperaturwechselbeständigkeitstests im Hinblick auf eine Delamination und sonstige Deformationen verglichen. Delaminationen und sonstige Deformationen (zum Beispiel Risse) waren hierbei als weiße Verfärbungen im Ultraschallbild erkennbar. Die Ergebnisse sind in Tabelle 1 dargestellt.

### Scherfestigkeitstest:

Zur Bestimmung der Haftfestigkeit der Chips auf den jeweiligen silberhaltigen Kontaktbereichen der Metall-Keramik-Substrate wurden Scherfestigkeitstests durchgeführt. Hierzu wurde die Scherkraft gemessen, die nötig war, den Chip bei einer Geschwindigkeit eines Schermeißels von 0,3 mm/s bei 20 °C vom Metall-Keramik-Substrat abzuscheren. Die Kraft wurde mittels einer Kraftmessdose aufgenommen (DAGE 2000, DAGE, Deutschland). Die Ergebnisse sind ebenfalls in Tabelle 1 dargestellt.

**Tabelle 1:**

| | Ergebnis des Temperaturwechselbeständigkeitstests | Ergebnis des Scherfestigkeitstests |
|---|---|---|
| Beispiel | Positiv; keine Delaminationen erkennbar | 45 - 55 N/mm² |
| Vergleichsbeispiel | Negativ; ausgeprägte Delamination insbesondere an den Kupferkanten erkennbar | 42 - 49 N/mm² |

Die Ergebnisse zeigen, dass das durch das erfindungsgemäße Verfahren erhaltene Metall-Keramik-Substrat mit silberhaltigen Kontaktbereichen dem Metall-Keramik-Substrat des Vergleichsbeispiels im Hinblick auf die Temperaturwechselbeständigkeit und die Haftfestigkeit deutlich überlegen ist.

## Patentansprüche

1. Verfahren zur Herstellung eines Metall-Keramik-Substrats aufweisend einen silberhaltigen Kontaktbereich, umfassend die Schritte
a) Bereitstellung eines Metall-Keramik-Substrats aufweisend
a1) einen Keramikkörper und
a2) eine mit dem Keramikkörper flächig verbundene Metallschicht, wobei die Keramik des Keramikkörpers aus der Gruppe ausgewählt ist, die aus Aluminiumnitridkeramiken, Siliziumnitridkeramiken und Aluminiumoxidkeramiken besteht,
b) Bereitstellung einer Silbertinte enthaltend
b1) einen Silbervorläufer, wobei der Silbervorläufer ein Silbercarboxylat ist, und
b2) eine organische Verbindung, die bei Raumtemperatur und Umgebungsdruck flüssig ist, wobei die organische Verbindung ein Terpen umfasst,
wobei der Anteil an Silber im Bereich von 1 - 60 Gewichtsprozent, bezogen auf das Gewicht der Silbertinte, liegt,
c) Aufbringen der Silbertinte auf einen Bereich der Metallschicht des Metall-Keramik-Substrats und
d) Zersetzung des in der Silbertinte enthaltenen Silbervorläufers zu Silber unter Erhalt eines Metall-Keramik-Substrats aufweisend einen silberhaltigen Kontaktbereich.

2. Verfahren nach Anspruch 1, **dadurch gekennzeichnet, dass** das Metall der Metallschicht Kupfer ist.

3. Verfahren nach Anspruch 1 oder 2, **dadurch gekennzeichnet, dass** das Silbercarboxylat ein Silberneodecanoat ist.

4. Verfahren nach einem der vorangegangenen Ansprüche, **dadurch gekennzeichnet, dass** das Terpen aus der Gruppe ausgewählt ist, die aus Orangenterpen, Limonen und Pinen besteht.

5. Verfahren nach einem der vorangegangenen Ansprüche, **dadurch gekennzeichnet, dass** die Silbertinte eine Carbonsäure enthält.

6. Verfahren nach einem der vorangegangenen Ansprüche, **dadurch gekennzeichnet, dass** die Zersetzung des in der Silbertinte enthaltenen Silbervorläufers wenigstens durch eine Maßnahme erfolgt, die aus der Gruppe ausgewählt ist, die aus thermischer Behandlung und Bestrahlung besteht.

## Claims

1. A method for producing a metal-ceramic substrate comprising a silver-containing contact region, the method comprising the steps of
a) providing a metal-ceramic substrate comprising
a1) a ceramic body and
a2) a metal layer connected in a planar manner to the ceramic body, wherein the ceramic of the ceramic body is selected from the group consisting of aluminum nitride ceramics, silicon nitride ceramics, and aluminum oxide ceramics,
b) providing a silver ink containing
b1) a silver precursor, wherein the silver precursor is a silver carboxylate, and
b2) an organic compound which is liquid at room temperature and ambient pressure, wherein the organic compound comprises a terpene,
wherein the proportion of silver is in the range of 1 - 60 percent by weight, based on the weight of the silver ink,
c) applying the silver ink to a region of the metal layer of the metal-ceramic substrate and
d) decomposing the silver precursor contained in the silver ink to form silver to obtain a metal-ceramic substrate comprising a silver-containing contact region.

2. The method according to claim 1, **characterized in that** the metal of the metal layer is copper.

3. The method according to either claim 1 or claim 2, **characterized in that** the silver carboxylate is a silver neodecanoate.

4. The method according to any of the preceding claims, **characterized in that** the terpene is selected from the group consisting of orange terpene, limonene and pinene.

5. The method according to any of the preceding claims, **characterized in that** the silver ink contains a carboxylic acid.

6. The method according to any of the preceding claims, **characterized in that** the silver precursor contained in the silver ink is decomposed by at least one measure selected from the group consisting of thermal treatment and irradiation.

## Revendications

1. Procédé pour la fabrication d'un substrat métallocéramique présentant une zone de contact contenant de l'argent, comprenant les étapes consistant à
a) fournir un substrat métallocéramique présentant
a1) un corps céramique et
a2) une couche métallique liée en surface au corps céramique, dans lequel la céramique du corps céramique est choisie dans le groupe constitué de céramiques en nitrure d'aluminium, céramiques en nitrure de silicium et céramiques en oxyde d'aluminium,
b) fournir une encre d'argent contenant
b1) un précurseur d'argent, dans lequel le précurseur d'argent est un carboxylate d'argent, et
b2) un composé organique liquide à température ambiante et à pression ambiante, dans lequel le composé organique comprend un terpène,
dans lequel la proportion d'argent se situe dans la plage allant de 1 à 60 pour cent en poids par rapport au poids de l'encre d'argent,
c) appliquer l'encre d'argent sur une zone de la couche métallique du substrat métallocéramique et
d) décomposer le précurseur d'argent contenu dans l'encre d'argent en argent pour obtenir un substrat métallocéramique présentant une zone de contact contenant de l'argent.

2. Procédé selon la revendication 1, **caractérisé en ce que** le métal de la couche métallique est du cuivre.

3. Procédé selon la revendication 1 ou 2, **caractérisé en ce que** le carboxylate d'argent est un néodécanoate d'argent.

4. Procédé selon l'une des revendications précédentes, **caractérisé en ce que** le terpène est choisi dans le groupe constitué de terpène d'orange, limonène et pinène.

5. Procédé selon l'une des revendications précédentes, **caractérisé en ce que** l'encre d'argent contient un acide carboxylique.

6. Procédé selon l'une des revendications précédentes, **caractérisé en ce que** la décomposition du précurseur d'argent contenu dans l'encre d'argent est effectuée au moins par une mesure choisie dans le groupe constitué de traitement thermique et d'irradiation.
